# EUROPÄISCHE PATENTSCHRIFT

(11) **EP 0 619 204 B1**
(45) Veröffentlichungstag und Bekanntmachung des Hinweises auf die Patenterteilung: **22.12.1999**
(21) Anmeldenummer: 94101256.9
(22) Anmeldetag: 28.01.1994
(51) Int. Cl.: B60R 21/20

(54) **Airbag-Einrichtung**
Airbag
Sac à air

(30) Priorität: 08.04.1993 DE 4311616
(43) Veröffentlichungstag der Anmeldung: 12.10.1994
(73) Patentinhaber: Volkswagen Aktiengesellschaft, 38436 Wolfsburg (DE)
(72) Erfinder: Matte, Ulf, Dipl.-Ing., D-29378 Wittingen (DE)

(56) Entgegenhaltungen:
- EP-A- 0 428 935
- DE-A- 2 035 742
- DE-A- 4 137 691
- US-A- 5 087 067
- PATENT ABSTRACTS OF JAPAN vol. 17, no. 403 (M-1453) 28. Juli 1993 & JP-A-05 077 683 (TOYOTA MOTOR CORP) 30. März 1993

## Beschreibung

Die Erfindung betrifft eine Anordnung aus einer Fahrzeuginstrumententafel und einer Airbag-Einrichtung gemäß dem Oberbegriff des Patentanspruchs 1 sowie eine Airbag-Einrichtung nach dem Oberbegriff des Patentanspruchs 8 und eine Airbag-Einrichtung nach dem Oberbegriff des Patentanspruchs 11.

Eine gattungsgemäße Einrichtung ist aus der US-5 087 067 bekannt. Diese zeigt eine Fahrzeuginstrumententafel, in der in einer im wesentlichen nach oben offenen Mulde ein durch eine Aufblasvorrichtung beaufschlagbarer Gassack gehalten ist. Diese Mulde wird durch einen Deckel verschlossen, der an einem die Airbag-Einrichtung aufnehmenden Trägerkörper befestigt ist und beim Aufblasen des Gassackes wegschwenkt. Davon abweichend ist beispielsweise aus der DE-42 18 659-A1 eine Airbag-Einrichtung bekannt, die von einem an der Fahrzeuginstrumententafel angelenkten Deckel bedeckt ist. Dem Grunde nach bekannt sind solche Einrichtungen auch aus den Schriften DE-38 00 652-C2 und DE-36 05 623-C2 sowie DE-41 37 691-A1. In der letztgenannten Schrift ist kein Hinweis darauf entnehmbar. daß die dort als Hohlraum bezeichnete Mulde zu einem anderen Zweck als dem der Unterbringung einer Airbag-Einrichtung vorgesehen ist.

Für alle zuvor genannten Airbag-Einrichtungen ist die Instrumententafel des Fahrzeugs konstruktiv besonders hergerichtet worden. Für die Übernahme derartiger Konzepte von Airbag-Einrichtungen in bereits auf dem Markt oder im Endstadium der Entwicklung befindliche Fahrzeuge müssen daher ohne entsprechende Sicherheitseinrichtungen ausgerüstete Armaturentafeln komplett ausgetauscht werden.

Die erfindungsgemäße Airbag-Einrichtung ist also als fertiger Bausatz komplett auf einem Trägerkörper montiert, der seinerseits in einer an sich offenen Mulde, beispielsweise einer Handschuhablage, befestigbar ist. Die die Airbag-Einrichtung bedeckende Abdeckkappe ist dabei an die Kontur der aufnehmenden Mulde angepaßt, so daß sich die gesamte Airbag-Einrichtung harmonisch in die gesamte Fahrzeuginstrumententafel einfügt. Als Verbindungsmittel können vorzugsweise Schrauben verwendet werden, deren Kopf sich im Inneren der Airbag-Einrichtung befindet, und deren Gewinde von der Innenseite der Instrumententafel her mit einer Mutter verschraubt wird. Ebenso denkbar ist aber auch die Anbringung eines Gewindekopfes im Inneren der Airbag-Einrichtung, der dann vom Inneren der Fahrzeuginstrumententafel her verschraubt wird. In beiden Fällen sind lediglich kleine Löcher in die Instrumententafel einzubringen, um eine vorteilhafterweise als Nachrüstsatz ausgebildete Airbag-Einrichtung nachträglich auf der Fahrzeuginstrumententafel zu fixieren. Der Produktionsprozeß von bereits in Serie befindlichen Instrumententafeln kann unverändert bleiben und muß lediglich um die Anbringung der Schraubendurchgangslöcher und den Einsatz der Airbag-Einrichtung ergänzt werden.

Durch die gemäß Patentanspruch 4 vorgeschlagene umlaufende Dichtlippe wird auf der Instrumententafel ein gleichmäßiges Fugenbild erzeugt. Die Nachgiebigkeit der Dichtlippe ist so gehalten, daß fertigungsbedingte Konturschwankungen an der Instrumententafel gut ausgeglichen werden können.

Insbesondere die Kombinationen der Merkmale gemäß den Ansprüchen 2 und 3 sowie 6 und 7 ermöglichen für die erfindungsgemäße Airbag-Einrichtung eine kompakte Bauweise, so daß gerade auch in Kleinfahrzeugen ein hoher Sicherheitsstandard angeboten werden kann.

Die Merkmale des Patentanspruchs 8 stellen sicher, daß das aus der Abdeckkappe herausschwenkbare Klappenteil als solches von außen nicht erkennbar ist.

Zu beachten ist auch, daß nach einem Fahrzeugunfall die ansonsten unbeschädigt gebliebene Instrumententafel weiterverwendet werden kann. Hierzu ist lediglich die aktivierte Airbag-Einrichtung durch einen neuen Nachrüsteinsatz zu ersetzen.

Ein vorteilhaftes Ausführungsbeispiel der Erfindung ist in der Zeichnung dargestellt. Es zeigt
- Figur 1:: die Draufsicht einer erfindungsgemäßen Airbag-Einrichtung, die in einer Handschuhablage einer Fahrzeuginstrumententafel eingebaut ist,
- Figur 2:: einen Schnitt gemäß Figur 1 II-II und
- Figur 3:: einen Schnitt gemäß Figur 1 III-III.

Gleiche Bauteile sind in allen Figuren gleich beziffert.

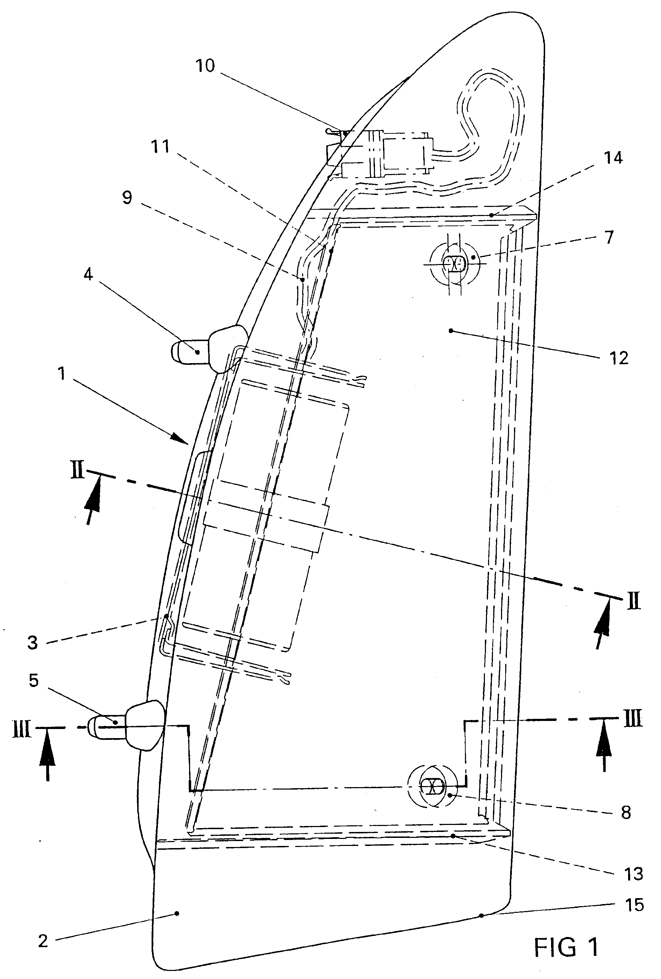

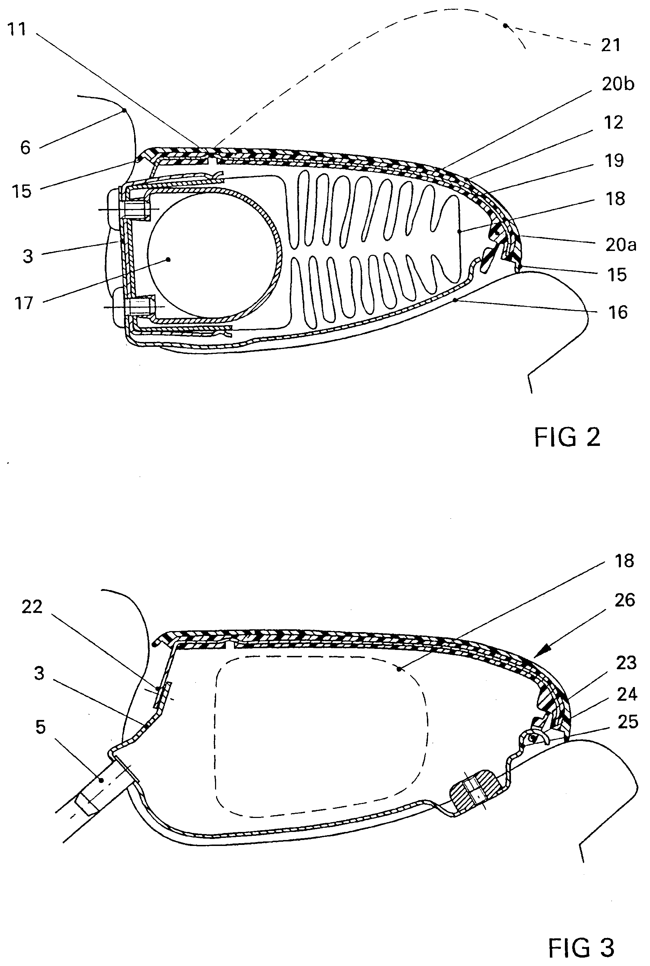

Man erkennt in Figur 1 eine insgesamt mit 1 bezeichnete Airbag-Einrichtung, die unterhalb einer Abdeckkappe 2 auf einem Trägerkörper 3 montiert ist. An diesem sind Steckbolzen 4 und 5 vorgesehen, die in entsprechend ausgeformte Öffnungen einer Instrumententafel 6 (siehe Figur 2) eingreifen. Weitere Verbindungselemente der Airbag-Einrichtung 1 zur Instrumententafel 6 werden gebildet durch Schraubmutternköpfe 7 und 8, in welche von der Innenseite der Instrumententafel 6 her Befestigungsschrauben zur Festlegung der gesamten Airbag-Einrichtung eingeschraubt werden können. Über eine Verbindungsleitung 9 und einen darin befestigten Stecker 10 ist die Airbag-Einrichtung 1 mit einem Sensorsystem des hier nicht weiter dargestellten Fahrzeuges verbindbar. Aus der Abdeckkappe 2 ist um eine Sollknicklinie 11 ein Klappenteil 12 herausschwenkbar. Dieses ist über von außen nicht sichtbare Reißlinien 13 und 14 mit der Abdeckklappe 2 verbunden. Wesentlicher Bestandteil der Abdeckkappe 2 ist ferner noch eine umlaufende Dichtlippe 15, die einwärts in eine ursprünglich als Handschuhablage konzipierte Mulde 16 (siehe Figur 2) der Instrumententafel 6 zeigt. Dichtlippe 15 und Abdecklappe 2 bilden so eine materialeinheitliche Baueinheit.

In Figur 2 erkennbar ist ein durch eine Aufblasvorrichtung 17 beaufschlagbarer Gassack 18, der unterhalb des Klappenteils 12 angeordnet ist. Konstruktive Besonderheiten des Klappenteils 12 sind ein vorzugsweise aus Metall gehaltender flacher Grundkörper 19, der von einer ersten - die Sollreißnähte 13, 14 aufweisenden
- Kunststoffschicht 20a umgeben ist, die ihrerseits von einer zweiten
- die Sollknickstelle 11 und die Sollreißnähte 13, 14 bedeckenden
- Kunststoffschicht 20b abgedeckt ist. Eine gestrichelte Linie 21 zeigt das Klappenteil 12 in seiner durch Schwenkung um die Sollknickstelle 11 erreichbare Öffnungsstellung.

Der Grundkörper 19 ist seinerseits am Trägerkörper 3 durch mehrere Schraubverbindungen gehalten, von denen hier nur eine symbolisch angedeutete Schraube 22 in Figur 3 zu sehen ist. Von besonderer Bedeutung ist hier auch eine an der ersten Kunststoffschicht 20a über einen Sollrißsteg 23 angelenkte Haltelasche 24, in die ein am Trägerkörper 3 angeformter Haltebügel 25 eingreift. Bei Aktivierung des hier nur mit einer Strichlinie angedeuteten Gassacks 18 reißen mehrerer solcher Sollrißstege 23 entlang der Vorderkante 26 der Abdeckkappe 2 ab und ermöglichen so eine Verschwenkung des Klappenteils 12 in die Öffnungsstellung 21 (siehe Figur 2).

Das in der Zeichnung dargestellte Ausführungsbeispiel zeichnet sich durch eine besonders gute Montagefreundlichkeit aus, da über die Steckbolzen 4 und 5 eine eindeutige Lagefixierung gewährleistet wird und durch lediglich zwei einfache Schraubvorgänge eine sichere Befestigung möglich ist.

Für die Aufblasvorrichtung 17 und den Gassack 18 kann auf handelsübliche Fabrikate zurückgegriffen werden, so daß die erfindungsgemäße Lösung auch sehr kostengünstig realisierbar ist.

Als Material für den Grundkörper 19 kann auch ein die Formstabilität der Abdeckkappe 2 gewährleistender Kunststoff sein. Vorteilhafterweise wird die Abdeckkappe 2 in einem Zweikomponenten-Spritzverfahren durch Umspritzung eines in einem Spritzwerkzeug einzulegenden Grundkörpers 19 hergestellt. Im Hinblick auf ein späteres Recycling empfiehlt sich als Material für die Kunststoffschichten 20a und 20b ein Werkstoff, der demjenigen der Instrumententafel 6 artgleich ist.

Es wird an dieser Stelle ausdrücklich darauf hingewiesen, daß die Erfindung auch solche Airbag-Einrichtungen umfaßt, bei denen die Abdeckklappe 12 nur einen Teil der Mulde 16 bedeckt oder beispielsweise an einen Lautsprecher oder eine Karosseriewand angrenzt.

## Patentansprüche

1. Anordnung aus einer Fahrzeuginstrumententafel (6) und einer Airbag-Einrichtung (1), die einen Trägerkörper (3) für einen durch eine Aufblasvorrichtung (17) beaufschlagbaren Gassack (18) aufweist, der im nicht betätigten Zustand in einer Ausnehmung der Fahrzeuginstrumententafel (6) unter einem als Abdeckkappe (2) ausgebildeten Gehäuseteil verborgen ist, dessen Außenkontur zum Einsatz der Airbag-Einrichtung (1) in die Ausnehmung zumindest abschnittweise an deren Geometrie angepaßt ist, und das zumindest teilweise gegenüber dem Trägerkörper (3) über ein Scharniermittel (11) verschwenkbar ist, sowie mit dem Trägerkörper (3) zugeordneten Befestigungsmitteln, mittels derer die Airbag-Einrichtung (1) in der Ausnehmung gehalten wird, dadurch gekennzeichnet, daß die **Abdeckkappe (2) wenigstens eine nachgiebig ausgebildete, umlaufende Dichtlippe (15) aufweist und** die die Airbag-Einrichtung (1) aufnehmende Ausnehmung durch eine an sich offene und ursprünglich als Ablage konzipierte Mulde der Fahrzeuginstrumententafel (6) gebildet ist.

2. Anordnung nach Anspruch 1, dadurch gekennzeichnet, daß die **Dichtlippe (15) muldeneinwärts gerichtet ist.**

3. Anordnung nach Anspruch 2, dadurch gekennzeichnet, daß die Abdeckkappe (2) und die Dichtlippe (15) eine materialeinheitliche Baueinheit bilden.

4. Anordnung nach einem der Ansprüche 1 bis 3, dadurch gekennzeichnet, daß das Scharniermittel eine durch eine Querschnittsschwächung erzeugte Sollknickstelle (11)

5. Anordnung nach einem der Ansprüche 1 bis 4, dadurch gekennzeichnet, daß die Abdeckkappe (2) ein Klappenteil (12) aufweist, das über Sollreißnähte (13, 14) mit benachbarten Abschnitten der Abdeckkappe (2) verbunden ist und durch Beaufschlagung des Gassackes (18) über das Scharniermittel (11) aus der Kontur der Abdeckkappe (2) herausschwenkbar ist.

6. Anordnung nach Anspruch 5 und Anspruch 4, dadurch gekennzeichnet, daß die Abdeckkappe (2) einen formstabilen Grundkörper aufweist, der von einer ersten - die Sollreißnähte (13,14) und die Sollknickstelle (11) aufweisenden - Kunststoffschicht (20a) umgeben ist, die ihrerseits durch eine zweite - die Sollreißnähte (13, 14) und die Sollknickstelle (11) bedeckenden - Kunststoffschicht (20b) abgedeckt ist.

7. Anordnung nach einem der Ansprüche 1 bis 6, dadurch gekennzeichnet, daß die Abdeckkappe (2) im Bereich des dem Scharniermittel (11) gegenüberliegenden Randes auf der Unterseite über Sollbruchstellen (23) angelenkte Befestigungselemente (24) aufweist, in die Halteeelemente (25) des Trägerkörpers (3) eingreifen.

8. Airbag-Einrichtung (1) mit einem Trägerkörper (3) für einen durch eine Aufblasvorrichtung (17) beaufschlagbaren Gassack (18), der im nicht betätigten Zustand unter einem als Abdeckkappe (2) ausgebildeten Gehäuseteil verborgen ist, welches zumindest teilweise gegenüber dem Trägerkörper (3) über ein Scharniermittel (11) verschwenkbar ist, dadurch gekennzeichnet, daß die Abdeckkappe (2) wenigstens eine umlaufende, **nachgiebige** Dichtlippe (15) aufweist, die deutlich außerhalb der Aufblasöffnungskontur des Trägerkörpers (3) verläuft.

9. Airbag-Einrichtung (1) nach Anspruch 8, dadurch gekennzeichnet, daß die Airbag-Einrichtung (1) über dem Trägerkörper (3) zugeordnete Befestigungsmittel zur Anbringung an bzw. in einer Fahrzeuginstrumententafel (6) verfügt.

10. Airbag-Einrichtung (1) nach Anspruch 8 oder 9, dadurch gekennzeichnet, daß die Airbag-Einrichtung (1) nach einem oder mehreren der Ansprüche 3 bis 7 weitergebildet ist.

## Claims

1. Arrangement consisting of a vehicle instrument panel (6) and an airbag device (1) which comprises a carrier body (3) for a gas bag (18) which can be influenced by an inflating device (17) and which in the inactive state is hidden in a recess in the vehicle instrument panel (6) below a housing part which is formed as a cover cap (2) and comprises an outer contour which for the purpose of inserting the airbag device (1) into the recess is tailored to suit the geometry of the said recess at least in sections, the said housing part being able to pivot at least partially with respect to the carrier body (3) by way of a hinge means (11) and further comprising attachment means allocated to the carrier body (3) by means of which attachment means the airbag device (1) is held in the recess, characterised in that the cover cap (2) comprises at least one nonrigid circumferential sealing lip (15) and the recess receiving the airbag device (1) is formed by means of an open depression, originally designed as a storage compartment, in the vehicle instrument panel (6).

2. Arrangement according to claim 1, characterised in that the sealing lip (15) is directed inwards towards the depression.

3. Arrangement according to claim 2, characterised in that the cover cap (2) and the sealing lip (15) form a component consisting of common material.

4. Arrangement according to any one of claims 1 to 3, characterised in that the hinge means is a predetermined bend site (11) which is produced by a line of weakness in the cross-section.

5. Arrangement according to any one of claims 1 to 4, characterised in that the cover cap (2) comprises a flap part (12) which is connected to adjacent sections of the cover cap (2) by way of seams (13,14) which are designed to tear and by inflating the gas bag (18) the said flap part can pivot by way of the hinge means (11) out of the contour of the cover cap (2).

6. Arrangement according to claim 5 and claim 4, characterised in that the cover cap (2) comprises a dimensionally stable basic body which is surrounded by a first synthetic material layer (20a) which comprises the seams (13, 14) which are designed to tear and the predetermined bend site (11) and for its part the said synthetic material layer is covered by a second synthetic material layer (20b) which covers the seams (13, 14) designed to tear and the predetermined bend site (11).

7. Arrangement according to any one of claims 1 to 6, characterised in that the cover cap (2) comprises in the region of the edge opposite the hinge means (11) on the lower side attachment elements (24) which are hinged by way of sites (23) which are designed to fracture, the said attachment elements being engaged by the holding elements (25) of the carrier body (3).

8. Airbag device (1) having a carrier body (3) for a gas bag (18) which can be influenced by an inflating device (17) and which in the inactive state is hidden below a housing part formed as a cover cap (2), which housing part can pivot at least partially with respect to the carrier body (3) by way of a hinge means (11), characterised in that the cover cap (2) comprises at least one circumferential non-rigid sealing lip (15) which clearly runs outside the inflation orifice contour of the carrier body (3).

9. Airbag device (1) according to claim 8, characterised in that the airbag device (1) comprises attachment means allocated to the carrier body (3) for attachment to or in a vehicle instrument panel (6).

10. Airbag device (1) according to claim 8 or 9, characterised in that the airbag device (1) is developed according to any one or several of claims 3 to 7.

## Revendications

1. Dispositif constitué d'un tableau de bord (6) de véhicule et d'un système airbag (1), comportant un corps de support (3) destiné à un sac à gaz (18) pouvant être actionné par un dispositif de gonflage (17), qui à l'état non activé est dissimulé dans un évidement du tableau de bord (6) sous un élément de boîtier réalisé sous la forme d'un volet de recouvrement (2), dont le contour extérieur est adapté, au moins par sections, à la géométrie du système airbag (1) pour l'insertion de ce dernier dans l'évidement, et qui peut pivoter, au moins partiellement, par rapport au corps de support (3) par l'intermédiaire d'un moyen charnière (11), ainsi que des moyens de fixation associés au corps de support (3), à l'aide desquels le système airbag (1) est retenu dans l'évidement, caractérisé en ce que le volet de recouvrement (2) comporte au moins une lèvre d'étanchéité périphérique (15) réalisée de façon élastique, et en ce que l'évidement recevant le système airbag (1) est formé par une cavité ouverte ménagée dans le tableau de bord (6) du véhicule, et conçue à l'origine comme boîte à gants.

2. Dispositif selon la revendication 1, caractérisé en ce que la lèvre d'étanchéité (15) est orientée vers l'intérieur de la cavité.

3. Dispositif selon la revendication 2, caractérisé en ce que le volet de recouvrement (2) et la lèvre d'étanchéité (15) forment une unité modulaire homogène du point de vue matériau.

4. Dispositif selon l'une des revendications 1 à 3, caractérisé en ce que le moyen charnière est une zone de pliage (11) produite par une réduction de section transversale.

5. Dispositif selon l'une des revendications 1 à 4, caractérisé en ce que le volet de recouvrement (2) comporte une partie (12) de volet qui est reliée à des sections voisines du volet de recouvrement (2) par l'intermédiaire de joints de rupture déterminée (13, 14), et qui, lorsque le sac à gaz (18) est alimenté, peut être pivotée hors du contour du volet de recouvrement (2) par l'intermédiaire de l'élément formant charnière (11).

6. Dispositif selon les revendications 5 et 4, caractérisé en ce que le volet de recouvrement (2) comporte un corps de base de forme stable qui est entouré d'une première couche de matière plastique (20a) - comportant les joints de rupture déterminée (13, 14) et la zone du pliage déterminée (11) - qui est de son côté recouverte d'une deuxième couche de matière plastique (20b) - recouvrant les joints de rupture déterminée (13, 14) et la zone de pliage déterminée (11) -.

7. Dispositif selon l'une des revendications 1 à 6, caractérisé en ce que, dans la zone du bord opposé au moyen charnière (11), le volet de recouvrement (2) comporte des éléments de fixation (24) articulés sur la partie inférieure par l'intermédiaire de points de rupture déterminée (23), dans lesquels s'engagent des éléments de retenue (25) du corps de support (3).

8. Dispositif airbag (1) comportant un corps de support (3) destiné à un sac à gaz (18) pouvant être alimenté par un dispositif de gonflage (17), qui à l'état non activé est dissimulé sous un élément de boîtier réalisé sous la forme d'un volet de recouvrement (2), qui peut pivoter, au moins partiellement, par rapport au corps de support (3) par l'intermédiaire d'un moyen charnière (11), caractérisé en ce que le volet de recouvrement (2) comporte au moins une lèvre d'étanchéité périphérique (15) élastique, qui s'étend nettement en dehors du contour de l'orifice de gonflage du corps de support (3).

9. Dispositif airbag (1) selon la revendication 8, caractérisé en ce que ce dispositif dispose de moyens de fixation associés au corps de support (3) pour la fixation sur ou dans un tableau de bord (6) d'un véhicule.

10. Dispositif airbag (1) selon la revendication 8 ou 9, caractérisé en ce qu'il comporte les perfectionnements énoncés dans une ou plusieurs des revendications 3 à 7.
